(19) Europäisches Patentamt / European Patent Office / Office européen des brevets

(11) **EP 2 617 681 A1**

(12) **EUROPEAN PATENT APPLICATION**

(43) Date of publication:
**24.07.2013 Bulletin 2013/30**

(51) Int Cl.:
***C01C 1/00*** *(2006.01)*

(21) Application number: **12000398.3**

(22) Date of filing: **23.01.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Amminex A/S**
**2860 Søborg (DK)**

(72) Inventors:
• **Quaade, Ulrich J.**
**2880 Bagsvaet (DK)**

• **Möller Borregaard, Louise**
**2100 Köbenhavn (DK)**

(74) Representative: **von Samson-Himmelstjerna,**
**Friedrich**
**Samson & Partner**
**Patentanwälte**
**Widenmayerstrasse 5**
**80538 München (DE)**

(54) **A method of reducing friction**

(57)    A method of reducing the friction between the wall(s) of a mold and the outer wall(s) of a metal container fitting snugly in the mold and containing a metal ammine complex salt which is uniaxially compacted within the container, comprises a) treating or covering the inner wall (s) of the container with a lubricant before the metal ammine salt is filled into the container, or b) mixing a solid lubricant with the metal ammine salt to be filled into the container is, or c) treating or covering a gas-permeable enclosure made of a flexible material and wrapped around the solid metal ammine salt with a lubricant before the solid metal ammine salt wrapped into the envelope is filled into the container, or a combination of a) and b) or a) and c). A lubricated container and a lubricated enclosure each containing a metal ammine salt is also disclosed.

Figure 1

## Description

**Field of the Invention**

The present invention relates to a method of reducing the friction between a mold and the outer wall of a metal container.

Compacted metal ammine complex salts are an efficient means for storing ammonia and releasing the latter for various purposes, for example consumption by an reductive process such as SCR (selective catalytic reduction) of $NO_x$ in the exhaust of a combustion engine. Usually, the ammonia is released from the metal ammine complex salt by some source of heat, but other means, such as a vacuum or a chemical agent such as water, may be used as well alone or in combination with heat.

Compacted metal ammine complex salts can be prepared by compaction in a mold piston by means of a piston (see WO 2008/081824, the entire content of which is incorporated herewith by reference). For the sake of a better thermal conductivity of the compacted material, they may also be wrapped into a gas-permeable enclosure made of a flexible, highly heat-conducting material before the compaction (see WO 2011/038916, the entire content of which is incorporated herewith by reference).

The compaction may be effected by uniaxial compaction directly in the metal (e. g. steel or aluminum) container intended for the delivery of ammonia at the site of consumption (see WO 2100/038916). In this case it is advantageous to fit the containers which usually have relatively thin walls snugly in a mold for the compaction step.

It was, however, found that it is rather difficult to remove the metal container from the mold after compaction. Apparently the metal container walls, which are microscopically rough if not treated in a special way, become entangled with the wall of the mold during the compaction process. This leads to a considerable amount of friction and makes the removal of the container from the mold difficult.

One way to solve this problem is to polish the walls of the metal containers, however this adds to the costs of the container.

It was an aim of the invention to find an inexpensive way to solve the above-addressed problem.

**Summary of the Invention**

In a first aspect, the invention relates to a method of reducing the friction between the wall(s) of a mold and the outer wall(s) of a metal container fitting snugly in the mold and containing a material comprising a metal ammine complex salt selected from the group consisting of salts of the general formula:

$$M_a(NH3)_nX_z,$$

wherein M is one or more cations selected from the group consisting of alkali metals, such as Li, Na, K or Cs, alkaline earth metals, such as Mg, Ca, Ba or Sr, aluminium and transition metals, V, Cr, Mn, Fe, Co, Ni, Cu or Zn or combinations of said metals, such as NaAl, KAl, $K_2Zn$, CsCu or $K_2Fe$; X is one or more anions selected from the group consisting of fluoride, chloride, bromide, iodide, nitrate, thiocyanate, sulphate, molybdate and phosphate ions; a is the number of cations per salt molecule; z is the number of anions per salt molecule; and n is the coordination number of 2 to 12; and mixtures thereof. The metal ammine complex salt is uniaxially compacted within the container. The method comprises

  a) treating or covering the inner wall(s) of the container with a lubricant before the material comprising the metal ammine complex salt or the material comprising the metal ammine complex salt wrapped into a gas-permeable enclosure made of a flexible material is placed into the container, or

  b) mixing a solid lubricant with the material comprising the metal ammine complex salt to be filled into the container is, or

  c) treating or covering a gas-permeable enclosure made of a flexible material with a lubricant into which the material comprising the metal ammine salt complex is wrapped before placing the wrapped material comprising a metal ammine complex salt wrapped into the enclosure is filled into the container, or any combination of a), b), and c),

so as to facilitate the removal of the metal container from the mold.

In a second aspect, the invention relates to a metal container filled with a material comprising a metal ammine salt as defined in claim 1 or with said material containing a solid lubricant or with said material wrapped into a gas-permeable enclosure made of a flexible material or with said material wrapped into a gas-permeable enclosure made of a flexible material treated or covered with a lubricant, wherein the inner walls of the metal container are covered with a lubricant.

The material in the container may be non-compacted (condition of the container before compaction of the material) or compacted (condition of the container after compaction of the material).

In a further aspect the invention relates to a gas permeable enclosure made of a flexible material being wrapped around a metal ammine salt-containing material, wherein said flexible material is treated or covered with a lubricant.

**Brief Description of the Drawings**

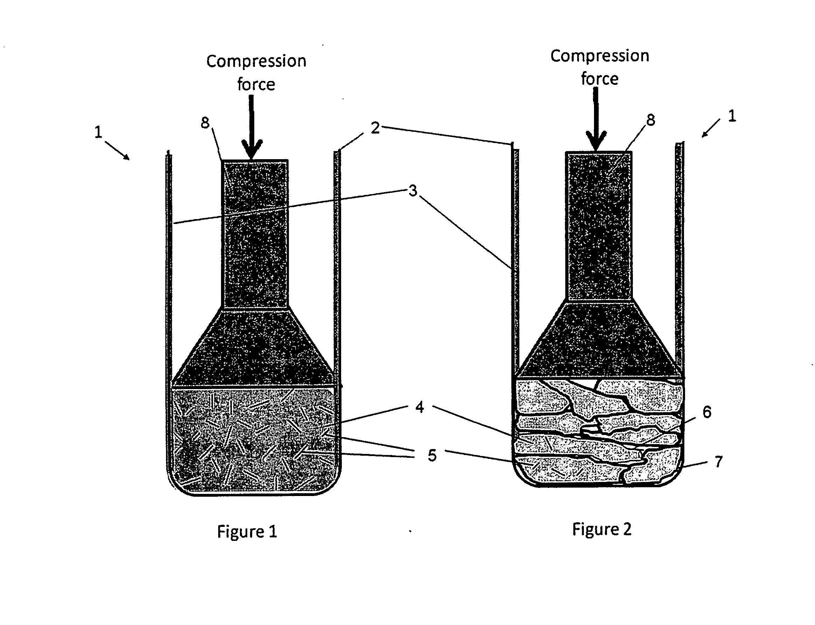

Fig. 1 is a schematic depiction of a compaction process by means of a piston for a metal ammine complex salt directly in a relatively thin-walled container fitting snugly in a mold. The container is treated with a lubricant, and the metal ammine complex salt further optionally contains a solid lubricant.

Fig. 2 is a schematic depiction of another compaction process by means of a piston for a metal ammine complex salt directly in a relatively thin-walled container fitting snugly in a mold. The container is treated with a lubricant, and the metal ammine complex salt is wrapped in gas-permeable enclosure made of a flexible material which may be treated with a lubricant.

**Detailed Description**

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description taken with the drawings making apparent to those skilled in the art how the several forms of the present invention may be embodied in practice.

It was surprisingly found that the friction between the outer wall of a non-polished metal container, in which a metal ammine complex salt, optionally wrapped in a gas-permeable enclosure, is uniaxially compacted by means of a piston, and the mold in which the container is fit snugly can be decreased significantly by decreasing the friction between the inner wall of the metal container and the metal ammine complex salt or the enclosure wrapped around it, which facilitates the removal of the container from the mold after compaction significantly. The reason for this surprising fact is not fully understood.

This allows a cheaper production of the containers compared with polishing, while still allowing facile removal from the mold.

The metal containers used in the present invention are usually made of steel or aluminum, but other metals or alloys, such as e.g. iron, titanium or tungsten, may be used.

The thickness of the container walls depends on the material of the container. In the case of steel or aluminum containers it is usually from about 0.25 mm to about 10 mm, preferably from about 0.5 mm to about 5 mm.

The container has a generally cylindrical shape, often with the exception of the bottom and top part, where the edges may be rounded, but other cross-section, such as oval cross-sections, may be used as well. The size of the container is not particularly limited and depends on the size of the final system wherein it is used. in the case, where the content of the container is used on a vehicle as a source of ammonia for SCR of NOx, the cylinder may e.g. have a diameter of from 50 to 400 mm and a length of from 200 mm to 800 mm.

The mold may be of any mechanically very stable material known to be used for this purpose by the person skilled in the art, such as polished steel or ceramics.

The piston for exerting the uniaxial compacting force may be made of the same or a similar material.

The metal ammine complex salt which is to be compacted within the container is selected from the group consisting of salts of the general formula:

$$M_a(NH3)_nX_z,$$

wherein M is one or more cations selected from the group consisting of alkali metals, such as Li, Na, K or Cs, alkaline earth metals, such as Mg, Ca, Ba or Sr, aluminium and transition metals, V, Cr, Mn, Fe, Co, Ni, Cu or Zn or combinations of said metals, such as NaAl, KAl, $K_2Zn$, CsCu or $K_2Fe$; X is one or more anions selected from the group consisting of fluoride, chloride, bromide, iodide, nitrate, thiocyanate, sulphate, molybdate and phosphate ions; a is the number of cations per salt molecule; z is the number of anions per salt molecule; and n is the coordination number of 2 to 12, and mixtures thereof.

The alkaline earth and manganese ammine halides, in particular chlorides, and sulphates are particularly preferred.

The metal ammine complex salt may contain additives, e.g. heat conducting flakes, and therefore in the claims and sometimes in the description the term "material comprising a metal ammine complex salt" is used. Otherwise, the term " metal ammine complex salt", except for the case where it is defined by its formula, is used interchangeably with the term "material comprising a metal ammine complex salt".

The metal ammine complex salts may be wrapped in an gas-permeable enclosure made of a highly heat-conducting flexible material having e.g. at least five times the thermal conductivity of the metal ammine complex salt enclosed in it before compaction for providing sufficient thermal conductivity when after compaction the material is heated for releasing ammonia. The flexible material may be, e.g., a metal foil, such as an aluminum foil, but other materials, such as organic polymers, plastics, carbon (e.g. carbon paper) etc. may be used as well.

In the present invention a lubricant is used for reducing the friction between the inner wall of the containers and the material to be compacted within the container.

The lubricant used for lubricating the inner walls of the container, or, as the case may be, for lubricating the flexible material surrounding the metal ammine complex salt to be compacted is preferably selected from solid lubricants, such as graphite, $MoS_2$, boron nitride, copper grease, talc, calcium fluoride, cerium fluoride, tungsten fluoride, wax emulsion, stearic acid, ammonium stearate, butyl stearate, oleic acid, and organic polymers, such as polytetrafluoroethylene (PTFE), fluorinated ethylene propylene polymer and polyethylene, or mixtures thereof. Graphite, $MoS_2$ and boron nitride are particularly preferred, and polytetrafluoroethylene or fluorinated ethylene propylene polymer is presently most preferred. Also liquid lubricants can be used, such as oil or grease e.g.organic or silicon based. Even liquids like water or organic solvents such as ethanol, ethylene glycol etc. have a significant lubricating effect. The thickness of the lubricant layer depends on the particular lubricant used, but should be as thin as possible so as not impede the heat transfer from an outside heat source through the container wall to the metal ammine complex salt when ammonia is released from it.

The solid lubricant which, as the case may be, is mixed with the material comprising a metal ammine complex salt is preferably selected from carbon, e.g. graphite but also lubricating forms of carbon such as carbon nanotubes (CNTs), $MoS_2$, boron nitride, metal powders, and powders of organic polymers, such as e.g. polyethylene and polytetrafluoroethylene particles, or mixtures thereof. The particle size and amount of solid lubricant mixed with the metal ammine complex salt depend on the specific lubricant. Generally, the particle size may range from about 2 nm to about 100 $\mu$m). Also liquid lubricants can be used such as oil or grease e.g. organic or silicon based. Even liquids like water or organic solvents such as ethanol, ethylene glycol etc. have significant lubricating effect. The thickness of the lubricant layer typically ranges from about 2 nm to about 0.1 mm.

The application of the lubricant, depending, of course, on the kind of lubricant, may be effected by any method known to the person skilled in the art , e.g. by spray-coating, by a thermal spray process, by contacting it with a solution of the lubricant, by smearing the lubricant onto the inner wall, by electroless plating or by electroplating.

Specific methods for specific lubricants can be found in the examples.

In Figure 1 a cylindrical container 1 having a wall 2 is shown, the inner surface of which is covered with a lubricant 3. A metal ammine complex salt 4 is contained in the container 1. The metal ammine complex salt 4 contains a solid lubricant 5. A compression force is exerted on the content 4, 5 of the container 1 by a piston 8 so as to compact the metal ammine complex salt 4 containing the solid lubricant 5.

In Figure 2 a cylindrical container 1 having a wall 2 is shown, the inner surface of which is covered with a lubricant 3. A metal ammine complex salt 4 is contained in the container 1, which optionally may contain a solid lubricant 5. The metal ammine complex salt 4 optionally containing the solid lubricant 5 is wrapped in a gas-permeable enclosure 6 made of a flexible heat-conducting material. The gas-permeable enclosure 6 is lubricated with a lubricant 7. A compression force is exerted on the metal ammine complex salt 4 containing the solid lubricant 5 and wrapped in the lubricated 7 gas-permeable enclosure 6 by a piston 8 so as to compact the metal ammine complex salt 4 containing the solid lubricant 5.

The following examples illustrate the invention without limiting it thereto.

**Examples**

**Example 1: Lubrication of the inner wall of a cylindrical steel container and compacting powdery metal ammine salt**

1A) A cylindrical steel container having a height of 100 mm, a diameter of 100 mm and a wall thickness of 2 mm was filled with 200 g of powdery $Sr(NH_3)_8Cl_2$ and fit snugly in a mold for high-pressure compaction made of polished steel (EN S355J0 (ST 52-3)). The powder is uniaxally compacted with a force which is increased from initially 20 tons ($1.96 \cdot 10^5$ N), which translates into a pressure of 25 MPa, to a final force of 190 tons ($1.87 \cdot 10^6$ N), which translates into a pressure of 240 MPa. It was difficult to remove the container from the mold.

1B) The inner wall of each of three cylindrical steel containers having a height of 100 mm, a diameter of 100 mm and a wall thickness of 2 mm was lubricated

a) by smearing copper grease (CU 1100, Pr. Nb. 852386) onto the inner wall (estimated thickness of the copper grease layer: roughly 1 um to 1 mm);
b) by spraying a graphite aerosol spray onto the inner wall (Graphite, colloidal, lubricant aerosol spray from Alpha Aesar (41775)); spraying time for the whole inner wall: about 2-5 s, drying time: about 30-60 s, estimated thickness of the resulting graphite layer: roughly 100 nm-100 $\mu$m), or, respectively,
c) by dip-coating fluorinated ethylene propylene polymer (DuPont™ FEP dispersionTE-9568 (fluoropolymer resin colloid in water)) onto the inner wall (estimated thickness of the resulting fluoropolymer layer: roughly 2 $\mu$m).

Then each container was filled with 200 g of powdery $Sr(NH_3)_8Cl_2$ and fit snugly in a mold for high-pressure compaction made of polished steel (EN S355J0 (ST 52-3)). The powder is uniaxally compacted with a force which is increased from initially 20 tons ($1.96 \cdot 10^5$ N), which translates into a pressure of 25 MPa, to a final force of 190 tons ($1.87 \cdot 10^6$ N), which translates into a pressure of 240 MPa. It was much easier to remove the containers from the mold than in the above comparative example 1A.

**Example 2: Lubrication of the inner wall of a cylindrical steel container and compacting metal ammine salt contained in an enclosure made of aluminum**

2A1) A cylindrical steel container having a height of 500 mm, a diameter of 172 mm and a wall thickness of 3 mm was filled with 130 packs of 100 g of Sr$(NH_3)_8Cl_2$ wrapped in aluminum foil and fit snugly in a mold for high-pressure compaction made of polished steel (EN S355J0 (ST 52-3). The packs containing the $Sr(NH_3)_8Cl_2$ in the container are uniaxally compacted in eight compaction steps each with a force of 350 tons ($3.44 \cdot 10^6$ N), which translates into a pressure of 148 MPa. It was very difficult to remove the container from the mold.

2B1) The inner wall of each of three cylindrical steel containers having a height of 500 mm, a diameter of 172 mm and a wall thickness of 3 mm was lubricated

a) by smearing copper grease (CU 1100, Pr. Nb. 852386) onto the inner wall (estimated thickness of the copper grease layer: roughly 1 um-1 mm);
b) by spraying a graphite aerosol spray onto the inner wall (Graphite, colloidal, lubricant, aerosol spray from Alpha Aesar (41775)); spraying time for the whole inner wall: about 2-5 s, drying time: about 30-60 s, estimated thickness of the resulting graphite layer: roughly 100 nm-100 $\mu$m), or, respectively,
c) by dip-coating fluorinated ethylene propylene polymer (DuPont™ (DuPont™ FEP dispersion-TE-9568 (fluoropolymer resin colloid in water))) onto the inner wall (estimated thickness of the resulting fluoropolymer layer: roughly 2 um).

Then each container was filled with 130 packs of 100 g of $Sr(NH_3)_8Cl_2$ wrapped in aluminum foil and fit snugly in a mold for high-pressure compaction made of polished steel (EN S355J0 (ST 52-3 )). The packs containing the $Sr(NH_3)_8Cl_2$ in the container are uniaxally compacted in eight compaction steps each with a force of 350 tons ($3.44 \cdot 10^6$ N), which translates into a pressure of 148 MPa. It was much easier to remove the containers from the mold than in the above comparative example 2A1.

2A2) A cylindrical steel container having a height of 360 mm, a diameter of 115 mm and a wall thickness of 1.0 mm was filled with 42 packs of 100 g of Sr $(NH_3)_8Cl_2$ wrapped in aluminum foil and fit snugly in a mold for high-pressure compaction made of polished steel (EN S355J0 (ST 52-3). The packs containing the $Sr(NH_3)_8Cl_2$ in the container are uniaxally compacted in 21 compaction steps each with a force of 110 tons ($1.08 \cdot 10^6$ N) which translates into a pressure of 104 MPa, to a final density of 1.2 g/ml. The force needed to remove the container from the compaction mold was 22 tons ($2.16 \cdot 10^5$ N).

2B2) The inner wall of a steel containers having a height of 360 mm, a diameter of 115 mm and a wall thickness of 1.0 mm was lubricated by dip-coating fluorinated ethylene propylene polymer (DuPont™ FEP dispersionTE-9568 (fluoropolymer resin colloid in water))) onto the inner wall (estimated thickness of the resulting fluoropolymer layer: roughly 2 $\mu$m).

Then the container was filled with 42 packs of 100 g of $Sr(NH_3)_8Cl_2$ wrapped in aluminum foil and fit snugly in a mold for high-pressure compaction made of polished steel (EN S355J0 (ST 52-3 )). The packs containing the $Sr(NH_3)_8Cl_2$ in the container are uniaxally compacted in 6 compaction steps each with a force of 120 tons ($1.18 \cdot 10^6$ N), which translates into a pressure of 113 MPa, to a final density of 1.2 g/ml. The force needed to remove the container from the compaction mold was 14 tons ($1.37 \cdot 10^5$ N).

**Example 3: Addition to lubricant to the metal ammine complex salt to be compacted**

3A) A cylindrical steel container having a height of 100 mm, a diameter of 100 mm and a wall thickness of 2 mm was filled with 200 g of powdery $Sr(NH_3)_8Cl_2$ and fit snugly in a mold for high-pressure compaction made of polished steel (EN S355J0 (ST 52-3)). The powder is uniaxally compacted with a force which is increased from initially 20 tons ($1.96 \cdot 10^5$ N), which translates into a pressure of 25 MPa, to a final force of 190 tons ($1.87 \cdot 10^6$ N), which translates into pressure of 240 MPa. It was difficult to remove the container from the mold.

3B) Another cylindrical steel container having a height of 100 mm, a diameter of 100 mm and a wall thickness of 2 mm was filled with 200 g of powdery $Sr(NH_3)_8Cl_2$, which had been mixed with 0.25 % by weight graphite (Graphite flake, natural, 10 mesh, 99.9 %), and fit snugly in a mold for high-pressure compaction made of polished steel (EN S355J0 (ST 52-3)). The powder is uniaxally compacted with a force which is increased from initially 20 tons ($1.96 \cdot 10^5$ N), which translates into a pressure of 25 MPa, to a final force of 190 tons ($1.87 \cdot 10^6$ N), which translates into a pressure of 240 MPa. It was much easier to remove the container from the mold than in the above comparative example 3A1.

**Example 4: Lubrication of flexible heat-conducting material contained in an enclosure surrounding metal ammine complex salt to be compacted**

**4A)** A cylindrical steel container having a height of 500 mm, a diameter of 172 mm and a wall thickness of 3 mm was filled with 130 packs of 100 g of Sr$(NH_3)_8Cl_2$ wrapped in aluminum foil and fit snugly in a mold for high-pressure compaction made of polished steel (EN S355J0 (ST 52-3)). The packs containing the Sr$(NH_3)_8Cl_2$ in the container are uniaxally compacted in eight compaction steps each with a force of 350 tons ($3.44 \cdot 10^6$ N), which translates into a pressure of 148 MPa. It was very difficult to remove the container from the mold.

**4B)** A cylindrical steel container having a height of 500 mm, a diameter of 172 mm and a wall thickness of 3 mm was filled with 130 packs of 100 g of Sr$(NH_3)_8Cl_2$ wrapped in Tri-Foil®, which is an foil made from aluminium that has been coated on one side with Teflon®. The Teflon® side is chosen as the outside of the packs and the packs are therefore lubricated.

The container is fit snugly in a mold for high-pressure compaction made of polished steel (EN S355J0 (ST 52-3)). The packs containing the Sr$(NH_3)_8Cl_2$ in the container are uniaxally compacted in eight compaction steps each with a force of 350 tons ($3.44 \cdot 10^6$ N), which translates into a pressure of 148 MPa. It was much easier to remove the container from the mold than in the above comparative example 4A.

Any of the lubricating methods of Examples 1, 2, 3 and 4 may be combined.

It is noted that the foregoing examples have been provided merely for the purpose of explanation and are in no way to be construed as limiting of the present invention. While the present invention has been described with reference to an exemplary embodiment, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular means, materials and embodiments, the present invention is not intended to be limited to the particulars disclosed herein; rather, the present invention extends to all functionally equivalent structures, methods and uses, such as are within the scope of the appended claims.

**Claims**

1. A method of reducing the friction between the wall(s) of a mold and the outer wall(s) of a metal container fitting snugly in the mold and containing a material comprising a metal ammine complex salt selected from the group consisting of salts of the general formula:

$$M_a(NH3)_nX_z,$$

wherein M is one or more cations selected from the group consisting of alkali metals, such as Li, Na, K or Cs, alkaline earth metals, such as Mg, Ca, Ba or Sr, aluminium and transition metals, V, Cr, Mn, Fe, Co, Ni, Cu or Zn or combinations of said metals, such as NaAl, KAl, $K_2$Zn, CsCu or $K_2$Fe; X is one or more anions selected from the group consisting of fluoride, chloride, bromide, iodide, nitrate, thiocyanate, sulphate, molybdate and phosphate ions; a is the number of cations per salt molecule; z is the number of anions per salt molecule; and n is the coordination number of 2 to 12; and mixtures thereof, which is uniaxially compacted within the container, wherein the method comprises

a) treating or covering the inner wall(s) of the container with a lubricant before the material comprising the metal ammine complex salt or the material comprising the metal ammine complex salt wrapped into a gas-permeable enclosure made of a flexible material is placed into the container, or
b) mixing a solid lubricant with the material comprising the metal ammine complex salt to be filled into the container is, or
c) treating or covering a gas-permeable enclosure made of a flexible material with a lubricant into which the material comprising the metal ammine salt complex is wrapped before placing the wrapped material comprising a metal ammine complex salt wrapped into the enclosure is filled into the container, or any combination of a), b), and c),

so as to facilitate the removal of the metal container from the mold.

2. The method of claim 1, wherein said lubricant is selected from the group consisting of graphite, $MoS_2$, boron nitride, copper grease, polytetrafluoroethylene, talc, calcium fluoride, cerium fluoride, tungsten fluoride, wax emulsion, stearic acid, ammonium stearate, butyl stearate and oleic acid or mixtures thereof.

3. The method of claim 1 or 2, wherein said solid lubricant is selected from the group consisting of graphite, $MoS_2$, boron nitride, copper grease and polytetrafluoroethylene or mixtures thereof.

4. The method of any of claims 1 to 3, wherein said inner wall of the container or the enclosure is treated or covered with said lubricant by spray-coating, by a thermal spray process, by contacting it with a solution of the lubricant, by smearing the lubricant onto the inner wall, by electroless plating or by electroplating.

5. The method of any of claims 1 to 4, wherein the metal container is a steel or aluminum container and the wall thickness of the container is from about 0.25 mm to about 10 mm, preferably from about 0.5 mm to about 5 mm.

6. A metal container filled with a material comprising a metal ammine salt as defined in claim 1 or with said material containing a solid lubricant or with said material wrapped into a gas-permeable enclosure made of a flexible material or with said material wrapped into a gas-permeable enclosure made of a flexible material treated or covered with a lubricant, wherein the inner walls of the metal container are covered with a lubricant.

7. The metal container of claim 6, wherein said material is compacted.

8. The metal container of claim 6 or 7, wherein the lubricant is selected from the group consisting of graphite, $MoS_2$, boron nitride, copper grease, polytetrafluoroethylene, talc, calcium fluoride, cerium fluoride, tungsten fluoride, wax emulsion, stearic acid, ammonium stearate, butyl stearate and oleic acid, preferably polyethylene.

9. A gas permeable enclosure made of a flexible material being wrapped around a metal ammine salt-containing material, wherein said flexible material is treated or covered with a lubricant.

10. The gas permeable enclosure of claim 9, wherein said lubricant is selected from the group consisting of graphite, $MoS_2$, boron nitride, copper grease, polytetrafluoroethylene, talc, calcium fluoride, cerium fluoride, tungsten fluoride, wax emulsion, stearic acid, ammonium stearate, butyl stearate and oleic acid, preferably polyethylene.

Compression force

Compression force

Figure 1                    Figure 2

Europäisches
Patentamt

European
Patent Office

Office européen
des brevets

# EUROPEAN SEARCH REPORT

**Application Number**

EP 12 00 0398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 305 979 A1 (AMMINEX AS [DK]) 6 April 2011 (2011-04-06) * claims; figures 3,5 * | 1-10 | INV. C01C1/00 |
| A | WO 2010/025948 A1 (AMMINEX AS [DK]; QUAADE ULRICH [DK]; SVAGIN JAKOB [DK]; JOHANSEN JOHNN) 11 March 2010 (2010-03-11) * page 4, line 18 - page 5, line 29 * | 1-3 | |
| A | WO 2006/081824 A2 (AMMINEX AS [DK]; JOHANNESSEN TUE [DK]; CHRISTENSEN CLAUS HVIID [DK]; N) 10 August 2006 (2006-08-10) * page 12, line 27 - page 13, line 30; claims * | 1-8 | |
| A | "Ceramics, Ceramic Processing" In: Ewsuk, K. G.: "Kirk-Othmer Encyclopedia of Chemical Technology", 4 December 2000 (2000-12-04), John Wiley, XP002679651, vol. 5, pages 638-669, * Chapter 4.3 * | 1-8 | |
| A,D | WO 2011/038916 A1 (AMMINEX AS [DK]; SVAGIN JAKOB [DK]; QUAADE ULRICH J [DK]; JOHANSEN JOH) 7 April 2011 (2011-04-07) * the whole document * | 1-10 | TECHNICAL FIELDS SEARCHED (IPC) C01C F01N B01D |

The present search report has been drawn up for all claims

| Place of search | Date of completion of the search | Examiner |
|---|---|---|
| The Hague | 11 July 2012 | Zalm, Wim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 12 00 0398

This annex lists the patent family members relating to the patent documents cited in  the above-mentioned European search report.
The members are as contained in the European Patent Office EDP file on
The European Patent Office is in no way liable for these particulars which are merely given for the purpose of information.

11-07-2012

| Patent document cited in search report | | Publication date | Patent family member(s) | | Publication date |
|---|---|---|---|---|---|
| EP 2305979 | A1 | 06-04-2011 | AT | 547597 T | 15-03-2012 |
| | | | EP | 2305979 A1 | 06-04-2011 |
| | | | ES | 2382521 T3 | 11-06-2012 |
| WO 2010025948 | A1 | 11-03-2010 | EP | 2342009 A1 | 13-07-2011 |
| | | | US | 2011218095 A1 | 08-09-2011 |
| | | | WO | 2010025948 A1 | 11-03-2010 |
| WO 2006081824 | A2 | 10-08-2006 | AU | 2006209949 A1 | 10-08-2006 |
| | | | CA | 2595965 A1 | 10-08-2006 |
| | | | EP | 1868941 A2 | 26-12-2007 |
| | | | EP | 2263975 A2 | 22-12-2010 |
| | | | JP | 2008528431 A | 31-07-2008 |
| | | | KR | 20070100786 A | 11-10-2007 |
| | | | RU | 2010113320 A | 20-10-2011 |
| | | | US | 2009123361 A1 | 14-05-2009 |
| | | | US | 2010024403 A1 | 04-02-2010 |
| | | | WO | 2006081824 A2 | 10-08-2006 |
| WO 2011038916 | A1 | 07-04-2011 | CA | 2775021 A1 | 07-04-2011 |
| | | | EP | 2483536 A1 | 08-08-2012 |
| | | | WO | 2011038916 A1 | 07-04-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008081824 A
- WO 2011038916 A
- WO 2100038916 A